# EUROPEAN PATENT APPLICATION

(11) **EP 2 677 465 A1**
(43) Date of publication of application: **25.12.2013**
(21) Application number: 12747767.7
(22) Date of filing: 23.01.2012
(51) Int. Cl.: G06K 9/62, H04L 9/32

(54) **VALIDATION SYSTEM FOR CONFIRMING THE REGISTRATION AND/OR CONTROLLING ACCESS BY PHYSICAL PERSONS THROUGH BIOMETRIC FACIAL RECOGNITION**

(30) Priority: 14.02.2011 BR PI1101789; 20.12.2011 BR
(71) Applicant: Neti Soluções Tecnológicas LTDA., Bebedouro, SP (BR)
(72) Inventor: FARIA, Alessandro de Oliveira, Cep : 14.700-450 (BR)
(74) Representative: Temino Ceniceros, Ignacio
(86) International application number: PCT/BR2012/000011
(87) International publication number: WO 2012/109718

(57) **Abstract**

Validation system for register confirmation and/or access authorization for natural persons using biometric facial recognition, a people authentication system complementary to conventional fraud prevention systems, made through the biometric facial image capture and his/her registration in single database associated with the natural persons register document, which will be validated or not after the parameterization, also used to control the access of persons in industrial, commercial and residential environments via biometric facial recognition, since the due registration is performed.

## Description

### FIELD OF THE INVENTION

This application for Patent of Invention refers to an unprecedented validation system for register confirmation and/or access authorization for natural persons using biometric facial recognition that consists of a person authentication system complementary to conventional fraud prevention systems, based on biometric comparison of faces, through image capture by webcam, scanner, digital or analog videos, digital/analog camcorder and digital camera for subsequent submission to a centralized database, which is a *cluster* of facial recognition that validates (or not) the operation if that person is registered with the appropriate equivalence of his/her Natural Persons Register (Passport, ID and other documents) and respective image, and in the case of that person is not included in the database, the registration is made through presentation of his/her document together with the biometric registration of the face.

The system pled herein can be used in several market segments requiring a registration to commitment/accountability note, especially for retail in general; funders; health and dental insurance; the real estate sector; car rental companies; online shopping managers on the web; registry offices and many others that require authentication of people.

### BACKGROUND OF THE INVENTION

Currently, with the procedures used on the market, it is not possible to guarantee the authenticity of a person only through the Natural Persons Register or Identity Card (ID), since many individuals dishonestly falsify the above documents to the purchase of products and/or enjoy financial benefits without intention to meet them. It is common adulteration of documents and validation even with big errors. A model widely used by fraudsters is a stolen document as mirror for the insertion of false data accompanied by a photo of the fraudster. With such documents, you can open bank accounts to receive or transfer money obtained through illegal activities, apply for loan, rent homes, buy cars, receive social security benefit, etc.

Currently, there is no known people authentication system in centralized database based on biometric comparison of the faces with the goal of protecting the market against fraud through the use of personal identification documents that has been stolen, lost or even sold clandestinely.

The method used is a simple checking in which the photo that appears in the document with the face of the person physically present, or consultation of the person's history to the credit protection services.

With the same inventive concept, that is, the linking of facial biometrics to a register, it was observed that the system as a whole could be applied to identify and authorize (or not) of the access of persons in places such as industrial, commercial and residential buildings, performed by devices such as electronic doors, turnstiles, gates, safes and other means of access. Once registered, when the person returns to the site, he/she will be immediately identified, having all your access history/visits located, providing agility in service and avoiding the misuse of documents to the records already made.

It is in the current state of the art, the patent document US2006/0288234 *"System and Method for Providing Secure Access to an Electronic Device Using Facial Biometrics"* that consists of a biometric authentication system applied to an electronic device as a personal/corporate computer, cell phone and other business that works with the electronic device user account in a database, where said electronic device has a built-in camera that works in conjunction with a facial tracking software that authenticates the user's electronic device continuously through biometrics, because while the user is within the range of the camera his/her authentication is performed continuously without interruption in use, but when the user goes out of range of the camera the device instantly "closes" so that other person does not use or have access to the information that is in the device.

The document mentioned above has as drawbacks the fact that its purpose is restricted to electronic devices (computer, cell phone, etc.) not being applied for documental verification/authentication as claimed in this patent application.

The patent document EP1041506 *"Self Service Terminal"* consists of a Biometrics application method for recognition of a user based on one or more user's facial features applied in a self-service terminal, being characterized by recording the image of a user through an exhibition, where is operable to display visual information of the user, registered image processing, comparison between the processed image and a database of images stored and processed to get a start and thus recognize the user.

As commented above, the document has restricted application, more specifically in electronic terminals.

### BRIEF DESCRIPTION OF THE INVENTION

Aware of the state of the art, gaps and constraints, after studies and researches, the inventor, expert in the field, created the validation system for register confirmation and/or access authorization for natural persons using biometric facial recognition in question, which consists of a non-intrusive personal recognition system through facial biometrics to identify people in order to combat fraud, in which the captured image is sent over the network (internet) to search in a centralized database, where it is processed by a biometric *cluster* for authentication, in case the register already exists, authorizing (or not) the operation or, otherwise, performance of the registration.

In short, the system consists in the submission of the user/client image captured via webcam or similar device for subsequent registration and/or authentication. As the information is condensed into unified databases on servers, it is possible to carry out the large-scale deployment and simple and transparent to the user. In addition, the system operates with facial recognition *cluster,* providing scalability and high availability for the authentication and/or identification of the user. For operation and agility, the system has a development kit for biometric logical access control (SDK) built-in with the purpose of providing rapid integration with all the legacy code of the user/client and/or institution. Thus, users/customers already registered will be validated with the biometric *template* and subsequently inserted in the database. In turn, new users/customers will have their biometric sampling searched in a centralized database, or checked against duplicity, i.e. similar faces with separate documents.

In short, the system pled herein features the following main advantages:
➢ The capture of biometrics is not invasive, not requiring any kind of physical contact and is user friendly as it is made possible by photo;
➢ Is the only biometrics that can be both analyzed digitally and by the human being;
➢ Facial biometrics has easy scalability and shows excellent performance in centralized database identification;
➢ Easy integration for access to images through the data network.
➢ Simplicity in operation, reducing operators training and learning time;
➢ A pioneer in applying for access control of people in different locations, reducing waiting time in lines;
➢ Allows a person to have only one account, eliminating frequent problems resulting from the exchange of documents, as well as provide management of unauthorized access with more precision;
➢ Use of images captured at the moment of registration of access for viewing reports;
➢ Easily adapted to different means of access (turnstiles, gates, doors and the like), and there is no need for an exchange of the same;
➢ Biometric processing performed in specific server, which enables the customer to use the existing platform on their computers.

In this context, the addition is subject to application through assisted operation, along with the attendant and release device, or non-assisted operation, where the release is performed by face reading.

### DESCRIPTION OF THE FIGURES

To better explain the invention, find below the drawings that represent it in an illustrative and non-exhaustive form:

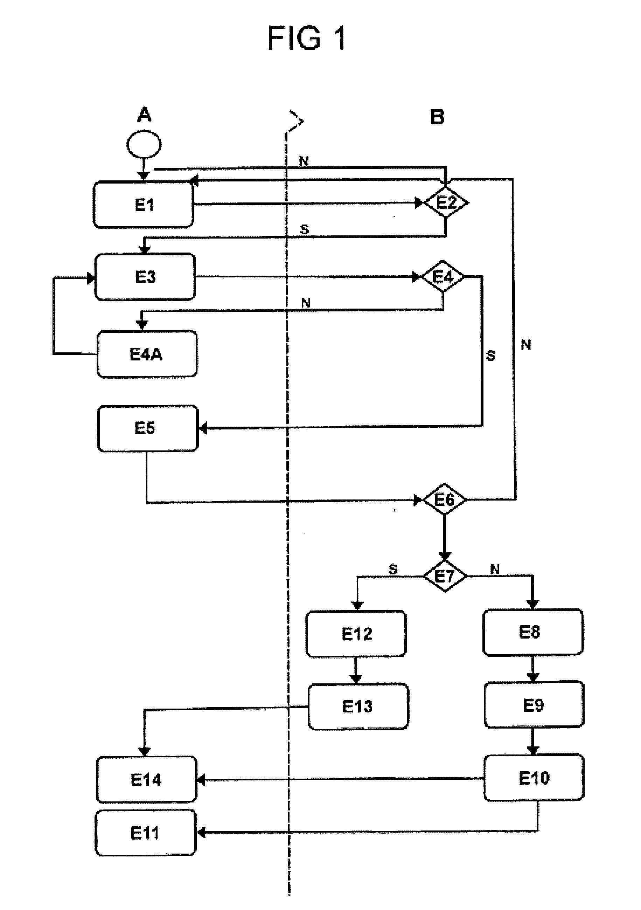

**Figure 1****:** Functional flowchart of the document validation system of natural persons register through biometric facial recognition.
**Figure 2****:** Schematic view showing the assisted operation.
**Figure 3****:** Schematic view showing the non-assisted operation.

### DETAILED DESCRIPTION OF THE INVENTION

The validation system for register confirmation and/or access authorization for natural persons using biometric facial recognition a people authentication system complementary to conventional fraud prevention systems, also used to control the access of persons in industrial, commercial and residential environments via biometric facial recognition, since the due registration is performed, made through the biometric facial image capture and his/her registration in single database associated with the natural persons register document, which will be validated or not after the parameterization.

More particularly, the system as well as the development integration methods for biometric logical access control (SDK) is made available through internet address (URL), which can vary according to the magnitude for the client access volume and/or complexity of the customer's private network integration.

For better understanding of the system, the functional flowchart will be divided into two environments, the user/customer (A) and server (B), the system above mentioned can be described in a first step (S1) where the company accesses the system through a login authentication where are filled in the fields, company, branch, and operator password. In a second step (S2), in the case of positive authentication (Y), the operator has access released to the system, otherwise, that is, negative (N) authentication, a loop occurs during the login. After being authenticated, the operator, in a third step (S3), view a screen with the customer's live image captured by a webcam, scanner type device or mobile phone, and goes ahead to the fourth step (S4) where it is submitted via upload to a quality processing, if the processing shows a negative (N) response, the user goes to the fourth step A (S4A), that shows the system operator the result of poor image quality, where the third step (S3) of image capture must be taken again, if validation is positive (Y), the user goes to the fifth step (S5) in which there is the completion of customer's registration data, with filling in of the fields "name" and "birth date". In this step (S5), it will be presented the customer's face followed by the fields filled in. In the sixth step (S6), after filling out all the data, the system informs about the existence of customer in the database. In case of a negative (N) response, the system returns to the first step (S1), and in case of a positive response (Y), in the seventh stage (S7) the system asks if the document exists. In case of a negative (N) response, the process of inclusion will be performed and the face associated with the document will be submitted to the customer identification procedure in the eighth step (S8) for in the ninth step (S9) to check the existence of other entries of the face in question with another document. If there is no duplicity, the system follows to the tenth step (S10) where is performed the data registration in the single database, for in the eleventh step (S11) to send the result in the form of a list similar identified. In step (S7), if the answer is positive, the document is already registered and it goes to the twelfth step (S12) where the newly captured image is checked through submission to a mathematical process of biometric comparison, And in the thirteenth step (S13) it is checked for duplicity. The result in step (S14) is the display of the similarity of the cadastral photo compared to the captured photo.

If the document is already present in the database, the newly captured face is compared mathematically with the image previously stored in the database. The comparison on biometrics is known as verification 1: 1 (one to one), in which a single image is compared to biometric sampling stored in the database. After the checking, the newly captured image and the cadastral photo with their respective data are displayed, containing also the processing result showing the positive or negative validation and the similarity of the images besides a number of the operation protocol.

If the document does not belong to the centralized database, the newly captured image is stored and associated with the document and the registration information is provided, where after the inclusion, the image will be subject to biometric identification 1: N (one to many) that aims to identify faces registered with separate documents, that is, the system detects a possible fraud.

If the newly registered face is not present at the database, the registration is performed, otherwise a similar list is presented to the operator alerting about an inconsistency in the document register.

Also according to the functional flowchart, the client user (A) can be described as the installer and operator in the case of assisted operation while the environment (B) is the administrator/server containing the facial biometrics algorithm and sharing it with the licensed stations, and all reference to the image captured and registration applied to person that accesses a particular environment. This application offers additional features such as card registration, registration of means of access and charting/reporting. A module responsible for the management of the means of access (such as ratchets) is added to the non-assisted operation. This module applies the access rules and monitors the means of access mentioned.

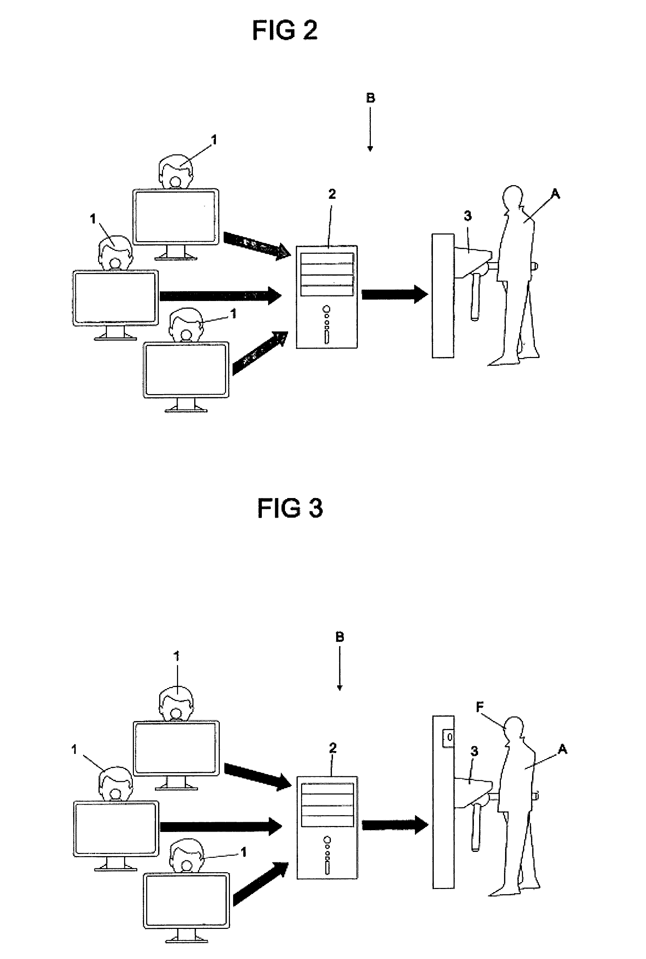

As shown in Figure 2, the assisted operation, that is, people go to the reception where they are registered or certified in the capture station by the attendant (1), and have their information saved on the local server (2). In addition, they can be delivered a card or other device to release the ratchet (3) or a similar mean of access.

In turn, in the non-assisted operation, shown in Figure 3, people go to the reception where they are registered or certified in the capture station by the attendant (1), and have their information saved on the local server (2), and are released (or not) through face recognition (F) located on the ratchet (3) or a similar mean of access.

## Claims

1. Validation system for register confirmation and/or access authorization for natural persons using biometric facial recognition, a people authentication system complementary to conventional fraud prevention systems, through association between image and document (preferably web-based document), registered in a centralized database.

2. Validation system for register confirmation and/or access authorization for natural persons using biometric facial recognition, according to claim 1, wherein there is a first step (S1) where the company log in; in the second step (S2), in case of positive authentication (Y), the operator has his access released, otherwise, that is, in case of negative response, (N) he/she returns to step (S1); in the third step (S3) it is displayed a screen with the customer's live image captured, followed by the fourth step (S4) where it is submitted via upload to a quality processing. If the response is negative (N), the result has poor quality and he/she must rerun to the third step (S3), image capture; if the validation is positive (Y), the user goes to the fifth step (S5) where the filling in of the client's registration data is performed; in step (S5) it will be presented the customer's face followed by the fields filled in; in the sixth step (S6) the system reports the existence of the customer in the database; If not (N), the system returns to the first step (S1) and if the response is positive (Y) on the seventh step (S7), the system asks if the document exists; If not (N), the inclusion process will be carried out and the face associated with the document will be submitted to the customer identification procedure in the eighth step (S8), to check, in the ninth step (S9), about the existence of other entries of the face in question with another document; if there is no duplicity, the system follows to the tenth step (S10) where is the data registration in is performed in the single database, and in the eleventh step, (S11) it sends the result in the form of a list of similar identified; in step (S7), if the response is "Yes" (Y), the document is already registered and the user go to the twelfth step (S12), where the newly captured image is checked by submission to a mathematical process of biometric comparison, and in the thirteenth step (S13) it check for duplicity; the result in step (S14) is the similarity of the cadastral photo compared to the captured photo.

3. Validation system for register confirmation and/or access authorization for natural persons using biometric facial recognition, according to claims 1 and 2, wherein it is the image capturing by webcam, digital camera and/or scanner.

4. Validation system for register confirmation and/or access authorization for natural persons using biometric facial recognition, according to claims 1 and 2, wherein it is applying the system to access control of people in industrial, commercial and residential environments via biometric facial recognition since the due registration has been performed.

5. Validation system for register confirmation and/or access authorization for natural persons using biometric facial recognition, according to claim 4, wherein it offers additional features such as registration, registration of means of access and charting/reporting.

6. Validation system for register confirmation and/or access authorization for natural persons using biometric facial recognition, according to claim 4, wherein the performance is made by assisted operation, with the attendant and release device, or non-assisted operation, where the release is performed by reading the face.
